# EUROPEAN PATENT APPLICATION

(11) **EP 0 592 166 A2**
(43) Date of publication of application: **13.04.1994**
(21) Application number: 93307842.0
(22) Date of filing: 01.10.1993
(51) Int. Cl.: G07C 5/08, G01P 1/12

(54) **A tachograph**

(30) Priority: 05.10.1992 GB 9220875
(71) Applicant: Matra Marconi Space UK Limited, Stanmore Middlesex HA7 4LY (GB)
(72) Inventor: Chant, Timothy John, Watford, Herts, WD2 6LY (GB)
(74) Representative: Cockayne, Gillian

(57) **Abstract**

A tachograph 20 determines and records the location of a vehicle with time as well as other information relating to the operation of the vehicle. Access is restricted to an electronic storage means 73, in which the information is recorded, preventing tampering with that information.

## Description

A first aspect of this invention relates to a tachograph for a motor vehicle, and a second aspect relates to a taximeter incorporating such a tachograph.

Regulations in certain countries, for example the European countries and the U.S.A., require that a tachograph be fitted to certain heavy goods vehicles and passenger service vehicles. Such tachographs normally record the distance travelled by the vehicle, the speed at which the vehicle has travelled, and the driver's hours.

Conventional tachographs comprise a unit to be fitted in an aperture on the dashboard of a vehicle, on the front face of the unit there being a large analogue speedometer. The front of this speedometer opens and the driver inserts a circular paper disk which rotates with time and on which is charted the speed, distance travelled hours of operation of the vehicle and mode of driver. This information is obtained by inputs from the driver indicating whether he is in "drive mode", "active work" mode, "other work" mode, or "rest mode", and from sensors on the vehicle detecting the speed of the vehicle, and whether the vehicle is in operation.

Conventional tachographs have been developed to enable the driver and operator of a vehicle to comply with the legal requirements regarding driving hours, and also to record any contravention of national speed limits. Such tachographs normally fulfil the minimum functions necessary to comply with the law and do not provide any features which are advantageous to the driver or operator (the operator being the individual or company responsible for the vehicle).

According to the present invention there is provided a tachograph comprising: means for receiving signals relating to the operation of a vehicle to which the tachograph is fitted from sensors on the vehicle; means for receiving a signal from which the location of the vehicle can be determined; means for deriving from the received signals data relating to the operation of the vehicle including the location of the vehicle with respect to time; and an electronic memory in which the data is stored, access to the electronic memory being restricted such as to prevent selected data relating to the operation of the vehicle from being altered.

A tachograph in accordance with the present invention provides a record of the vehicle location with time from which parameters relating to the vehicle operation of interest to the operator can be deduced. Additionally a "tamperproof" record is provided of selected data, which selected data would normally be that required to be recorded by the law applying to the vehicle. This thereby eliminates the need for an operator to have a computer separate from the "standard tachograph" for deriving the parameters in which he has an interest. Preferably the tachograph uses the location of the vehicle with time to derive one or more of the following parameters: driving time; driving time remaining; speed of vehicle; distance travelled by vehicle; route of vehicle, acceleration of vehicle; or any other parameter derivable from the location of the vehicle with respect to time. Therefore, by recording the location and the vehicle with time all the normal functions of the tachograph can be fulfilled plus many others.

A tachograph in accordance with the present invention also enables an operator to review the journey taken by a vehicle which will reveal any unauthorised use of the vehicle, and also any contravention of road traffic legislation prohibiting the vehicle to which tachograph is fitted from using certain roads or other areas.

Advantageously the tachograph comprises means for receiving a radio signal, wherein the location of the vehicle is determined from the radio signal, and preferably the radio signal is received from a satellite forming part of a global positioning system. Alternatively a network of radio beacons can be used, wherein the radio signal is received from a radio transmitter at a known location. Both methods provide for accurate determination of the vehicles location.

The means for determining the position of the vehicle may comprise an inertial navigation system which can provide the location where a radio signal cannot be received.

Advantageously a tachograph in accordance with the invention additionally comprises means for transmitting stored data to an interrogation device. This enables the information contained within the tachograph to be rapidly transferred to an operator. For example, the interrogation device may receive data from the tachograph each time the vehicle to which the tachograph is fitted enters the yard of an operator. Alternatively the interrogation device may be a hand held device which could be used either by a vehicle operator or a person concerned with enforcement of traffic regulations.

It may be particularly advantageous if the tachograph comprises means for transmitting the position of the vehicle to a remote interrogation device, this enabling an operator to keep a track on the vehicle position and therefore advise customers of the expected arrival time of a vehicle. This may also be particularly advantageous in preventing unauthorised use of the vehicle if the tachograph automatically transmits the location of the vehicle in response to unauthorised use, either because the driver has not identified himself to the tachograph, or because entry to the vehicle has been forced. In this case it is preferable if a signal is also transmitted to indicate that use of the vehicle is unauthorised, thus bringing it to the operators attention. Advantageously the position of the vehicle is transmitted to a base station with which the vehicle is associated, such as the operators yard.

Because the storage means of a tachograph in accordance with the invention is electronic then this facilitates rapid interrogation of that information. Advantageously data from the tachograph is stored on storage means that can be removed from the tachograph. This may be of particular advantage when a driver is operating a plurality of vehicles because the removable storage means can be associated with the driver and therefore keep a record of the operation of a plurality of vehicles with which the driver has been associated. It also permits the driver at the end of the day to take the storage means for analysis. The removable storage means advantageously comprises an electronic memory located on a card which can be inserted and removed through an aperture in the tachograph. Inductive coupling of the card to the tachograph is beneficial in that it avoids the needs for electrical contacts which can fail because of dirt or inappropriate handling.

A tachograph in accordance with the invention preferably has an electronic memory card associated with a specific person, for example driver or co-driver, and also a card associated with the vehicle which contains data relating to the service history of the vehicle.

Preferably the tachograph comprises a display for displaying information obtained from the data stored within the tachograph and this may advantageously give the position of the vehicle.

Algorithms are advantageously incorporated within the tachograph for calculating the legal driving time remaining to the driver or other similar parameters which may also be displayed. The legal requirements for a country can be obtained from a data store which can be connected to the tachograph, or alternatively from a radio signal received by the tachograph. This enables the driver to use the vehicle in different countries without having to calculate the legal requirements for those countries. The tachograph simply advises him of his driving time remaining in accordance with that country's regulations. If the regulations of his home country change, then the tachograph can be similarly updated.

A tachograph in accordance with the invention can readily be adapted for receiving information from additional sensors on the vehicle and it may be advantageous if the tachograph receives information from sensors on the vehicle monitoring one or more of: fuel level; state of cargo door; temperature of cargo; engine revolutions; load contents input/output; or other operating parameter of the vehicle.

Cargo door monitoring enables the operator on reviewing the information contained in the tachograph to determine whether the cargo door has been opened when a vehicle has been at a location where it would not normally be expected to be opened. A sensor for load content input/output may advantageously comprise a bar code reader located by the cargo door. This or a similar device enables monitoring of goods loaded/unloaded. This is particularly advantageous where the vehicle contents are unloaded on request by the customer, (as opposed to specific orders being placed before the vehicle leaves the depot), as the stock level of the vehicle can be recorded by the base station such that if necessary another vehicle can be sent out to supplement the first.

The tachograph can advantageously further comprise means for receiving data conveying operating parameters or locations of other vehicles.

According to a second aspect of the invention a taximeter is provided incorporating a tachograph in accordance with the first aspect of the invention thereby recording the movements of the taxi, and, if desired transmitting the location of the taxi to a base station. Advantageously the taximeter comprises means of calculating and displaying the fare and advantageously further comprises means for receiving a radio signal and setting the fare rate in dependence thereon. This later aspect enables a central authorisation body to programme the fare rate into the taximeter, avoiding the need for every taximeter to be sent off for input of a new rate each time the fares are reviewed.

Two embodiments of the present invention will now be described, by way of example only, with reference to the accompanying drawings of which:
Figure 1 schematically illustrates a vehicle having a tachograph in accordance with the first aspect of the invention;
Figure 2 illustrates a tachograph in accordance with the present invention;
Figure 3 is a diagrammatic representation of a taxi having a taximeter in accordance with a second aspect of the present invention; and
Figure 4 is a schematic illustration of the circuitry of a tachograph or taximeter in accordance with the invention.

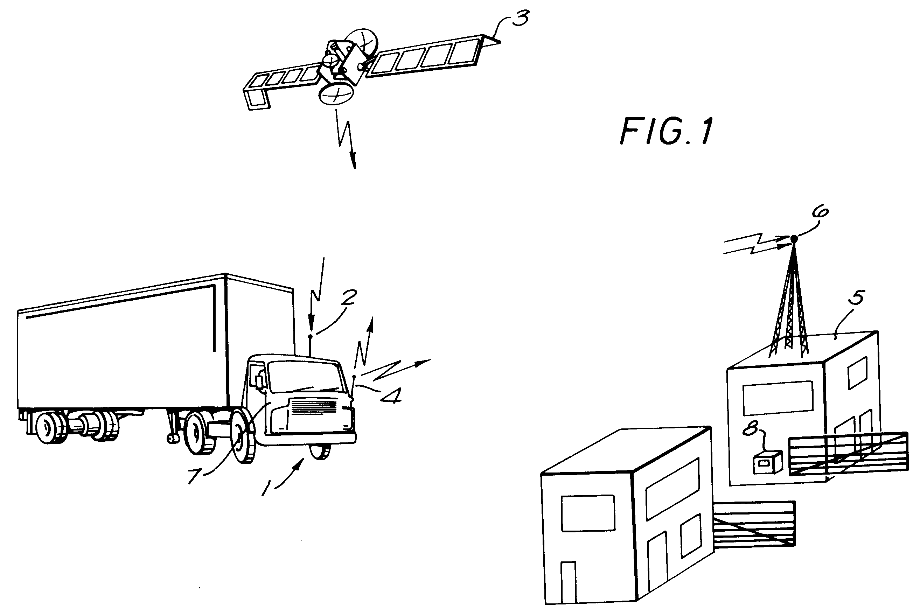

Referring to figure 1 there is illustrated a truck 1 having an antenna 2 for receiving signals from a satellite 3, which signals give the location of the vehicle. The vehicle is also fitted with a further antenna 4 for transmitting signals to a base station 5 of the vehicle operator via antenna 6. The truck 1 also communicates with base station 5 when the vehicle enters and leaves the operators yard via infra red transceiver 7 mounted on the front corners of the truck, and corresponding infra red transceivers 8 mounted adjacent to the gates of the operators yard.

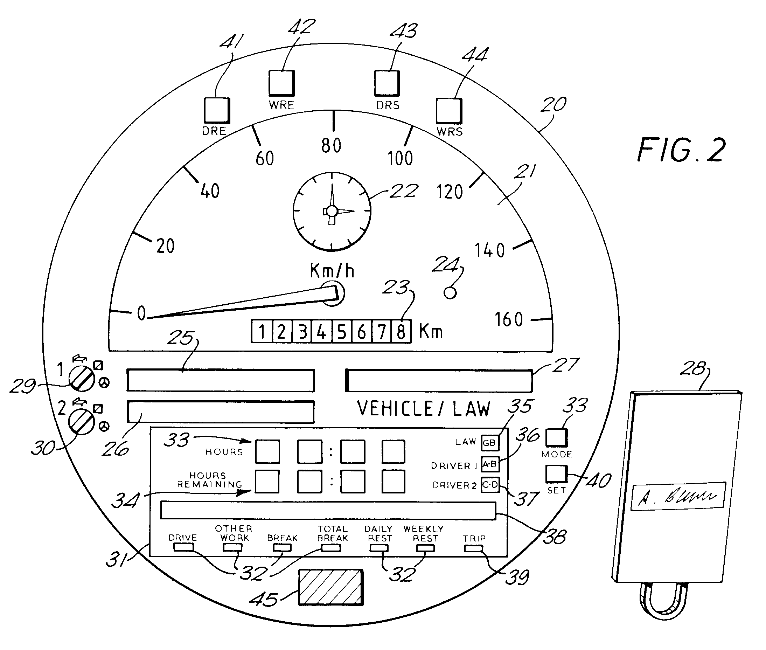

In figure 2 there is illustrated a tachograph 20 which is fitted to the truck 1 of figure 1. This tachograph is of the conventional cylindrical shape such that it can be fitted into the standard aperture provided in the dashboard of heavy goods vehicles and public services vehicles. This also enables the tachograph to be retrofitted to existing vehicles.

The tachograph comprises a standard analogue speedometer 21, analogue clock 22, kilometer recorder 23 and speed warning indicator lamp 24. In addition the tachometer comprises a plurality of apertures 25, 26 and 27, the first two of which are for receiving a storage cards 28 (only one of which is shown) associated with specific drivers. The slot 27 is for a similar operators card (not shown) which collects information relating to the service history of the vehicle. When the law under which the vehicle is operating changes, for example when a national law changes, or when the vehicle passes from one country to another, this slot 27 can also be used to insert a card carrying information relating to the new law which is read and stored by the tachometer. When this has been done the service history card can be replaced. Alternatively this data may be received via a radio link.

Associated with each card slot 25, 26 is an activity switch 29, 30 which each driver sets to indicate the activity being undertaken. For each driver the tachometer is either in a drive mode (steering wheel), other work mode (box) or rest mode (bed).

Each card 28 comprises an inductive coupling which couples information out of a memory of the tachometer to provide a record on an electronic memory contained within the card 28 of the activity of the vehicle and driver. This includes data relating to the location with time of the vehicle, from which parameters such as speed and journey time can be calculated. It also contains a record of parameters associated with the vehicle such as fuel, acceleration, engine revs, temperature of goods, and opening of cargo door, as well as recording contraventions of the speed of the vehicle from a sensor on the vehicle. Selected data required by law to be recorded cannot be altered by the driver or vehicle operator.

The tachograph comprises an LCD display 31 which can be set to different modes by operation of mode switch 33. The mode selected is indicated by blanking out one of the sections 32 of the display associated with that mode. Once a mode is selected the time lapse relevant to that mode is indicated in hours and minutes on display 33, and time remaining before the driver exceeds the legal limit is indicated in hours and minutes on display 34.

The display additionally has a section 35 for indicating the country under which law the tachograph is operating, and sections 36 and 37 indicating the initials of the drivers in order to provide a check that the cards inserted are correctly associated with the drivers of the vehicle. There is also a general display 38 on which additional information can be displayed by selecting further modes via mode button 33, the information available depending on the vehicle type. Such information may include state of cargo door, temperature of refrigerated cargo, level of fuel for a refrigeration plant, or information from a base station or other vehicles in a fleet.

The tachograph may also receive information from a bar code reader (not shown) located at the rear of the vehicle which the driver uses when accepting the load to record the load accepted, and when unloading to record what has been unloaded. This not only provides a record of what is on the vehicle, but also what has been unloaded where. This and all the other information in the tachograph is transmitted via antenna 4 to the operators base station 5, The operator can thus detect low stock levels on the vehicle, and take appropriate action. The operator is also able to detect the late running of the vehicle and advise customers of the expected time of arrival.

At the top portion of the tachograph 20 there are four buttons which enable the driver to record when daily rest ends (DRE), when weekly rest ends (WRE), when daily rest starts (DRS), and when weekly rest starts (WRS). This information is stored electronically, and enable the same function to be performed as is presently achieved by the driver marking appropriate lines on the paper disc of a tachograph.

If a suitable receiver is fitted to the vehicle, the tachometer may also display traffic information on display 38 or alternatively messages from the operator base station 5. This portion 38 of display 31 can also be used to display any other appropriate information that is desired by the driver and which the vehicle is capable of providing or receiving.

Information from the tachograph 20 is also obtainable by removal of the cards associated with drivers and vehicle, which are then read by a card reader.

A further way in which information can be derived from the tachograph is via transceiver 45 located on the tachograph. This is designed for interrogation by the police or Ministry of Transport officials, who have an appropriate reader. On stopping the vehicle they can immediately transfer information from the tachograph to a portable reader, providing them with a permanent record of the tachograph data for analysis. Alternatively if such a permanent record is not required they can use the display 31 to obtain the information without the need for a reader.

The vehicle 1 illustrated in figure 1 is also fitted with an alarm system. Any unauthorised entry or use of the vehicle activates the alarm causing the tachograph to transmit a signal to the base station 5 notifying of the alarm and informing of the location of the vehicle.

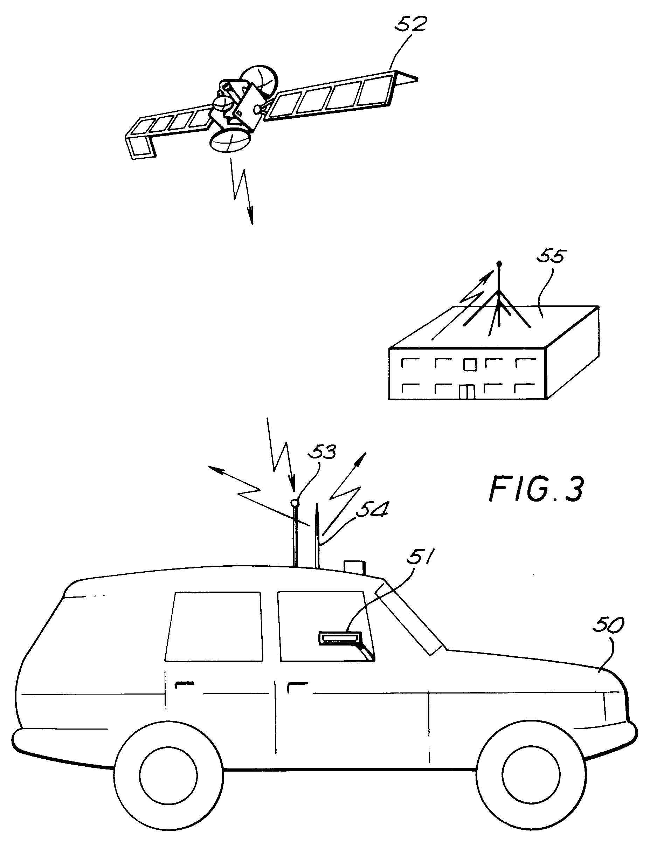

Referring to figure 3 there is illustrated a taxi 50 comprising a taximeter 51 including a tachograph in accordance with the present invention. The taximeter 51 receives signals from satellite 52 via aerial 53 which gives the position of the taxi. These signals are retransmitted via antenna 54 to a taxi control centre 55 such that the position of the vehicle is known. This can be used for assessing which taxi is closest to a client requiring a taxi.

The taximeter 51 calculates the fare which is displayed, and which is calculated using the location of the taxi at the start and end of the fare regardless of route taken. The rate per kilometer is set by an electronic signal which is periodically transmitted by a regulatory body.

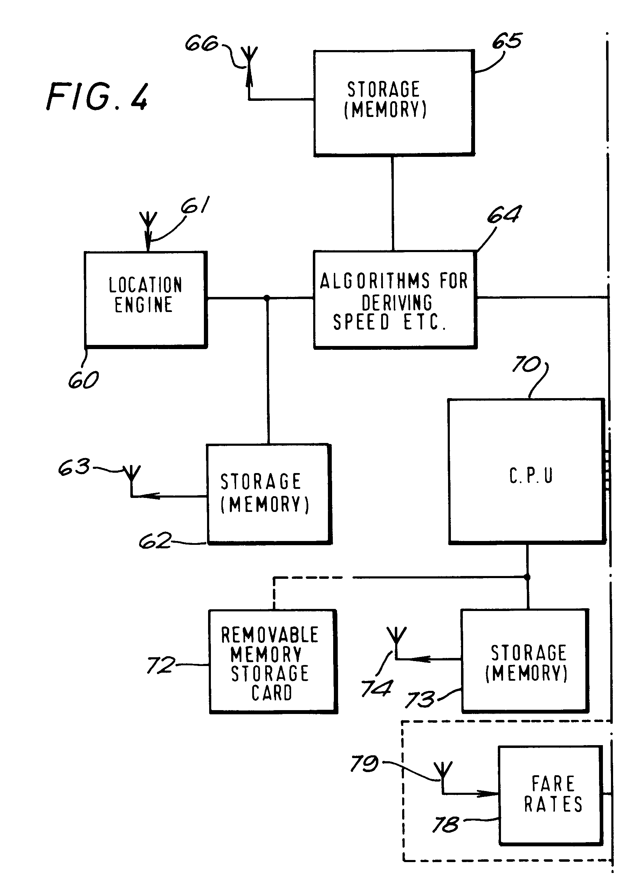

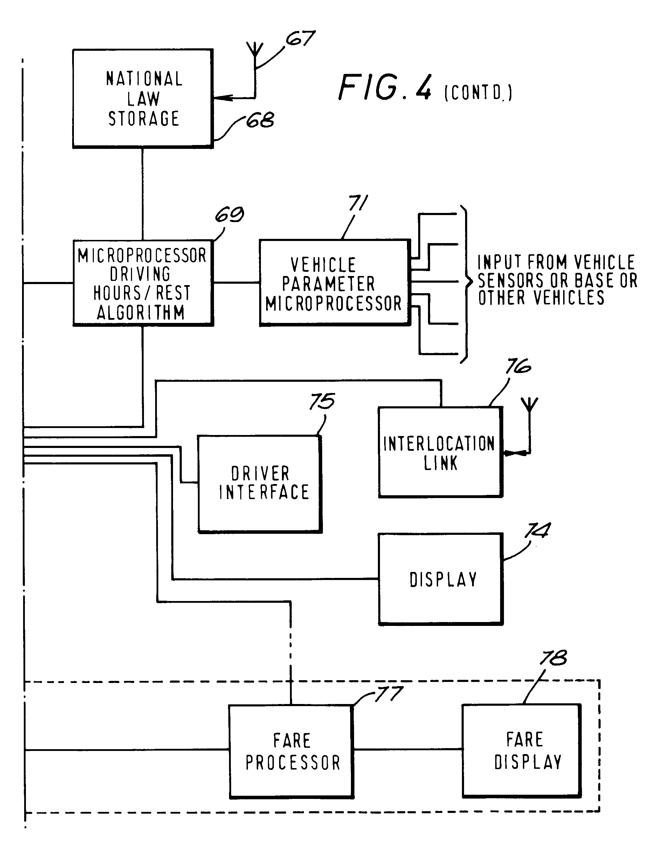

Figure 4 schematically illustrates, in block diagram form, the circuitry required by the tachograph of figure 2.

Although the boxes illustrated in figure 4, representing different functions performed by the tachograph, are shown connecting in series, in practice they would be connected to a database such that all data would be accessible sections of the circuitry.

The tachograph comprises a location engine 16 which receives time and location signals via antenna 61 from a satellite forming part of the global positioning system, and storage memory 62 records these. External access can be gained to this memory 62 via antenna 63. This information is used in algorithms contained in microprocessor 64 for deriving the speed of the vehicle, distance travelled, and other similar parameters derivable from the location of the vehicle with time. These are again stored in a storage memory 65 from where they can be externally accessed via antenna 66.

The tachograph receives data on national law via antenna 67, or alternatively this data may be received by insertion of card with this data on. In either case data is recorded in storage area 68 and is used by algorithms, contained within microprocessor 69, to calculate driving hours, driving hours remaining, rest periods, and other such parameters required by national law for a country in which the vehicle is operating. The algorithms within the microprocessor 69 also require information on vehicle parameters, and these are received from vehicle parameter microprocessor 71 which receives inputs from vehicle sensors the base station, and other vehicles, depending upon the functions which it is desired that the tachograph perform.

A central processing unit (CPU) 70 is at the heart of the tachograph and has direct access to each of the memory stores 62, 65, and information generated by microprocessors 69 and 71. The CPU 70 also uses information from removable memory storage cards 72 (only one of which is shown) associated with the driver, co-driver and operator. These cards transmit information such as the identity of the driver and driver parameters (the driver may already have been working driving another vehicle and the CPU 70 will recognise this and advise microprocessor 69). Information received from the memory storage cards is retained in storage memory 73 from which an output can be directly derived via antenna 74. The storage memory 73 also contains the output from CPU 70 which is fed to the removable memory storage card 72.

Access from information in CPU 70 is displayed on display 74 in response to instructions from the driver or operator via driver interface 75. Direct access to the CPU 70 is also gained via interrogation link 76 which enables the CPU to be accessed from either a remote base station or portable interrogation unit.

If the tachograph is to be incorporated in a taxi meter then a fare processor 77 is also connected to the central processor unit. This receives such parameters as distance travelled and speed and time spent not moving but with a passenger from the CPU 70 and uses this information with the fare rates obtained from fare rates receiver 78, which receives signals via antenna 79 from the local taxi licensing authority. The fare processor 77 displays the fare rate on display 78.

## Claims

1. A tachograph (20) comprising: means for receiving signals relating to the operation of a vehicle to which the tachograph is fitted from sensors on the vehicle; means for receiving a signal from which the location of the vehicle can be determined; means for deriving from the received signals data relating to the operation of the vehicle including the location of the vehicle with respect to time; and an electronic memory (28) in which the data is stored, access to the electronic memory being restricted such as to prevent selected data relating to the operation of the vehicle from being altered.

2. A tachograph as claimed in claim 1 wherein the location of the vehicle with time is used to derive one or more of the following: driving time; driving time remaining; speed of vehicle; distance travelled by vehicle; route of vehicle, acceleration, or other parameter derivable from the location of the vehicle with respect to time.

3. A tachograph as claimed in claim 1 or 2 comprising means for receiving a radio signal, wherein the location of the vehicle is determined from the radio signal.

4. A tachograph as claimed in claim 3 wherein the radio signal is received from a satellite forming part of a global positioning system.

5. A tachograph as claimed in claim 3 wherein the radio signal is received from a radio transmitter at a known location.

6. A tachograph as claimed in any preceding claim, wherein the categories of selected data can be altered.

7. A tachograph as claimed in any preceding claim comprising means for transmitting stored data to an interrogation device.

8. A tachograph as claimed in any preceding claim comprising means for transmitting the position of the vehicle to an interrogation device.

9. A tachograph as claimed in claim 8, wherein the tachograph automatically transmits the position of the vehicle in response to detection of unauthorised use.

10. A tachograph as claimed in claim 9 wherein a signal is transmitted to indicate the use of the vehicle is unauthorised.

11. A tachograph as claimed in claim 9 or 10 wherein unauthorised use is detected by operation of the vehicle without authorised driver identification being received by the tachograph.

12. A tachograph as claimed in claim 9, 10 or 11 wherein unauthorised use includes unauthorised entry detected by the activation of an alarm system of the vehicle.

13. A tachograph as claimed in any preceding claim wherein the position of the vehicle is transmitted to a base station.

14. A tachograph as claimed in any preceding claim comprising means for storing data relating to the operation of a vehicle, and means for transmitting the data to a remote interrogation unit.

15. A tachograph as claimed in any preceding claim further comprising means for transmitting stored data via radio waves to a base station.

16. A tachograph as claimed in any preceding claim further comprising means for transmitting stored data to a portable interrogation unit.

17. A tachograph as claimed in any preceding claim further comprising means for transmitting stored data when the vehicle passes an interrogation unit.

18. A tachograph as claimed in any preceding claim wherein the stored data is transmitted in response to a request signal.

19. A tachograph as claimed in any preceding claim wherein the data is transmitted by infra red radiation.

20. A tachograph as claimed in any preceding claim wherein the data is transmitted by radio waves.

21. A tachograph as claimed in any preceding claim wherein the selected data stored in the memory is retained if a power supply to the tachograph fails.

22. A tachograph as claimed in any preceding claim wherein the data is stored on storage means that can be removed from the tachograph.

23. A tachograph as claimed in claim 22 wherein at least part of the removable storage means comprises an electronic memory located on a card which can be inserted and removed through an aperture in the tachograph.

24. A tachograph as claimed in claim 23 wherein the card makes electrical contact with the tachograph by inductive coupling.

25. A tachograph as claimed in claim 23 or 24 having a plurality of cards associated with it each of which can be uniquely identified by the tachograph.

26. A tachograph as claimed in claim 23 or 24 wherein the card is associated with the vehicle and contains data relating to the service history of the vehicle or other operating parameters.

27. A tachograph as claimed in any preceding claim comprising a display for displaying information obtained from the data stored within the tachograph.

28. A tachograph as claimed in claim 27 wherein the display gives the present position of the vehicle.

29. A tachograph as claimed in any preceding claim wherein the tachograph comprises means for inputting data relating to required parmeters for the operation of the vehicle and means for inputting or modifying algorithms to enable the required parameters to be calculated and recorded from the signals received.

30. A tachograph as claimed in any preceding claim further comprising means for receiving data conveying the location of other vehicles.

31. A tachograph as claimed in claim 29 wherein the parameters to be calculated are obtained from a data store which can be connected to the tachograph.

32. A tachograph as claimed in claim 29 wherein the parameters to be calculated are obtained from a radio signal.

33. A tachograph as claimed in any preceding claim for receiving information from sensors on the vehicle monitoring one or more of the following: fuel level; state of cargo door; temperature of cargo; engine revolution; load contents input, or other operating parameter of the vehicle.

34. A tachograph as claimed in any preceding claim comprising a printer for printing out stored data.

35. A taximeter incorporating a tachograph as claimed in any one of claims 1 to 30.

36. A taximeter as claimed in claim 35 comprising means for calculating and displaying the fare.

37. A taximeter as claimed in claim 36 further comprising means for receiving a radio signal and setting the fare rate in dependence thereon.

38. A taximeter as claimed in claim 35, 36 comprising means for receiving a data input from a data store which is plugged into the taximeter, and which data store determines the fare rate.

39. An interrogation device for use with a tachograph as claimed in any one of claims 1 to 33.
